# EUROPÄISCHE PATENTSCHRIFT

(11) **EP 2 377 738 B1**
(45) Veröffentlichungstag und Bekanntmachung des Hinweises auf die Patenterteilung: **12.06.2019**
(21) Anmeldenummer: 11162112.4
(22) Anmeldetag: 12.04.2011
(51) Int. Cl.: B60T 15/04, B60T 15/22, B60T 15/24, B60T 15/36, B60T 15/52, B60T 17/22

(54) **Mit einem Führerbremsventil zusammen wirkende Vorrichtung zum automatischen Angleichen des Hauptluftleitungsdrucks von Fahrzeugen eines Schienenfahrzeugzuges**
Device which works together with a driver brake valve for automatically adjusting the main air supply pressure of vehicles of a rail vehicle
Dispositif agissant avec une soupape de freinage de guidage pour l'équilibrage automatique de la pression de la conduite d'aération principale d'un véhicule sur rails

(30) Priorität: 16.04.2010 DE 102010015148
(43) Veröffentlichungstag der Anmeldung: 19.10.2011
(73) Patentinhaber: KNORR-BREMSE Systeme für Schienenfahrzeuge GmbH, 80809 München (DE)
(72) Erfinder: Visi, Janos, 1223, Budapest (HU); Völbel, Heinz, 80809, München (DE)
(74) Vertreter: Schönmann, Kurt

(56) Entgegenhaltungen:
- EP-B1- 1 520 764
- DE-A1- 19 859 901
- DE-B3- 10 360 515
- DE-C- 973 852

## Beschreibung

Die Erfindung betrifft eine mit einem Führerbremsventil zusammen wirkende Vorrichtung zum Angleichen des Hauptluftleitungsdrucks von Fahrzeugen eines Schienenfahrzeugzuges auf einen gemeinsamen Regelbetriebsdruck, beinhaltend einen Druckmittelbehälter zur temporären Speicherung von Druckluft, mit welcher durch Betätigen eines manuellen Bedienorgans eine Steuerseite eines Relaisventils des Führerbremsventils für den Angleichvorgang beaufschlagbar ist, gemäß dem Oberbegriff von Anspruch 1.

Unter Angleichen im Zusammenhang mit Schienenfahrzeugbremsen versteht man das Angleichen der Hauptluftleitungsdrücke mehrerer Wagen oder Zugteile eines Schienenfahrzeugzuges auf einen gemeinsamen Regelbetriebsdruck, insbesondere im Falle von Überladungen. Überladung bedeutet, dass in den Steuerkammern der Steuerventile ein höherer Druck als der Regelbetriebsdruck vorhanden ist, wobei bei einer Überladung die Bremse nicht vollständig gelöst werden kann. Überladungen können beispielsweise bei Inbetriebnahme, Lok- oder Führerstandswechsel aufgrund unterschiedlicher Istwerte des Regelbetriebsdrucks entstehen. Weiterhin sind Überladungen auch bei zu langen Füllstößen in die gelöste Bremse möglich.

Die DE 198 59 901 A1 offenbart eine pneumatische Angleichervorrichtung mit Haltephase und eine Führerbremsventilanlage mit einer pneumatischen Angleichervorrichtung mit Haltephase.

Aus dem Stand der Technik, beispielsweise aus der DE 33 27 903 A1 sind Steuerventile mit Angleicherventil bekannt. Nachteilig ist jedoch, dass solche in Steuerventile integrierte Angleicherventile bei jedem Steuerventil des Zugverbands vorgesehen werden müssen und somit nur für feste Zugeinheiten wie beispielsweise Triebzügen geeignet sind.

Gemäß einer weiteren Variante sind in Lokomotiven von Schienenfahrzeugverbänden gattungsgemäße Führerbremsventile mit einer Vorrichtung zum Angleichen bekannt, beispielsweise aus der DE 1 149 736. Dort wird ein Führerbremsventil mit einem federbelasteten Angleicherventil beschrieben, welches über eine Drossel mit einem Zeitbehälter verbunden ist. Der Zeitbehälter steht wiederum mit der Steuerkammer oder Steuerseite eines Relaisventils in Strömungsverbindung, um abhängig von dem Steuerdruck in der Steuerkammer einen Hauptluftleitungsdruck HL einzuregeln. In der Fahrtstellung des Führerbremsventils kann dann durch ein Betätigen des Angleicherventils der Zeitbehälter mit Druckluft befüllt werden. Der entstehende Zeitbehälterdruck wirkt dann über die Düse oder Drossel in der Steuerkammer auf einen Relaiskolben in der Weise, dass sich wie nach einem Füllstoß der Druck in der Hauptluftleitung nicht auf den durch den Regler bestimmten, sondern auf einen etwas höheren Druckwert einstellt. Der Zeitbehälter entlüftet sich jedoch über eine Düse, wodurch sich der temporär erhöhte Hauptluftleitungsdruck wieder dem Regelbetriebsdruck angleicht. Die Zeit für den Druckabsenkung ist dabei so gewählt, dass sie innerhalb der Empfindlichkeitsgrenzen der Steuerventile liegt, so dass diese nicht ansprechen können.

Für Länder, in denen es üblich ist, die Fahrzeuge nur mit entlüfteter Hauptluftleitung abzustellen wie z.B. in Frankreich oder Ungarn kann der Angleichvorgang automatisch, hauptluftleitungsgesteuert oder direkt durch die Steuerventile durchführt werden, sofern der komplette Zugverband mit den beispielsweise in der vorgenannten DE 33 27 903 A1 beschriebenen Angleicherventilen ausgerüstet ist. Anderenfalls geschieht das Angleichen durch den Lokführer manuell am aktiven Führerbremsventil gemäß UIC 541-03, Abs. 4.4. Dabei kann es jedoch vorkommen, dass der Fahrzeugführer vergisst, den Angleichvorgang durch manuelle Betätigung durchzuführen.

Der Erfindung liegt demzufolge die Aufgabe zugrunde, ein Führerbremsventil der eingangs erwähnten Art derart fortzubilden, dass Angleichvorgänge automatisch und zuverlässig durchgeführt werden können. Insbesondere sollen bestehende Führerbremsventile auf möglichst einfache Weise mit den dafür notwendigen Mittel umgerüstet werden können.

Diese Aufgabe wird erfindungsgemäß durch die Merkmale von Anspruch 1 gelöst.

### Offenbarung der Erfindung

Der Erfindung liegt der Gedanke zugrunde, dass bei einem Bremsvorgang bzw. bei einem Schnellbremsvorgang der Hauptluftleitungsdruck der Hauptluftleitung HL charakteristisch abfällt, also nach Vorgängen, nach denen ein Angleichvorgang stattfinden soll bzw. kann. Deshalb ist eine wenigstens vom Hauptluftleitungsdruck der Hauptluftleitung HL steuerbare Ventileinrichtung vorgesehen, durch welche die Steuerseite des Relaisventils des Führerbremsventils für einen automatischen Angleichvorgang mit Druckluft aus dem Druckmittelbehälter beaufschlagbar ist.

In diesem Fall erfolgt das Angleichen daher automatisch mit dem Auftreten eines entsprechenden Hauptluftleitungsdrucks der Hauptluftleitung HL und kann nicht mehr vergessen werden.

Insbesondere ist die Ventileinrichtung vom Hauptluftleitungsdruck der Hauptluftleitung HL derart steuerbar, dass sie bei Vorliegen eines einen vorgegebenen Ansprechdruck erreichenden oder überschreitenden Hauptluftleitungsdrucks der Hauptluftleitung HL die Steuerseite des Relaisventils des Führerbremsventils für den automatischen Angleichvorgang mit Druckluft aus dem Druckmittelbehälter beaufschlagt, welche aber bei Vorliegen eines den vorgegebenen Ansprechdruck unterschreitenden Hauptluftleitungsdrucks der Hauptluftleitung HL eine solche Druckbeaufschlagung unterbindet.

Eine solche Funktionalität kann mit einfachen Mitteln realisiert werden, welche insbesondere auf einfache Weise an einem konventionellen Führerbremsventil nachgerüstet bzw. in ein solches integriert werden können.

Durch die in den Unteransprüchen aufgeführten Maßnahmen sind vorteilhafte Weiterbildungen und Verbesserungen der in Anspruch 1 angegebenen Erfindung möglich.

Besonders bevorzugt beinhaltet die Ventileinrichtung wenigstens ein vom Hauptluftleitungsdruck der Hauptluftleitung HL gegen die Wirkung von Federmitteln steuerbares 3/2-Wegeventil oder eine vom Hauptluftleitungsdruck der Hauptluftleitung HL gegen die Wirkung von Federmitteln steuerbare Druckschalter-Elektromagnetventil-Kombination, um die oben beschriebene Funktionalität zu realisieren.

Falls die Lokomotive des Schienenfahrzeugzuges mit einem Steuerventil mit Angleicherventil ausgerüstet ist, kann die Ventileinrichtung zusätzlich vom Vorsteuerdruck Cv dieses Steuerventils derart steuerbar sein, dass bei Vorliegen eines einen vorgegebenen Vorsteuerdruck Cv* oder Bremsdruck C* unterschreitenden Vorsteuerdrucks Cv bzw. Bremsdrucks C die Steuerseite des Relaisventils mit der Druckluft aus dem Druckmittelbehälter beaufschlagt und andernfalls eine solche Druckbeaufschlagung unterbunden wird. Solche Steuerventile erzeugen in Abhängigkeit von den von der Hauptluftleitung HL herbeigeführten Druckänderungen des Hauptluftleitungsdrucks den Bremsdruck C zum direkten Be- und Entlüften der angeschlossenen Bremszylinder oder den Vorsteuerdruck Cv für ein zwischengeschaltetes Relaisventil, um die angeschlossenen Bremszylinder indirekt zu Be- und Entlüften.

Damit wird dieser Vorsteuerdruck Cv bzw. Bremsdruck C als zusätzliches pneumatisches Signal herangezogen, welches sich charakteristisch verändert, wenn ein Angleichvorgang stattfinden kann bzw. soll, insbesondere im Nachbremsbetrieb und nach einer Schnellbremsung. Bei dieser Ausführungsform müssen somit beide pneumatischen Signale kumulativ die beschriebenen charakteristischen Verhaltensweisen zeigen, nämlich einerseits der Hauptluftleitungsdruck der Hauptluftleitung HL und andererseits der Vorsteuerdruck Cv bzw. Bremsdruck C, damit Druckluft aus dem Druckluftbehälter die Steuerseite des Relaisventils belüften und somit einen Angleichvorgang automatisch auslösen kann. Dabei wird also der Druckmittelbehälter abhängig vom Hauptluftleitungsdruck der Hauptluftleitung HL belüftet und der Druck in dem dann belüfteten Druckmittelbehälter abhängig vom Vorsteuerdruck Cv oder vom Bremsdruck C auf die Steuerseite des Relaisventils des Führerbremsventils weiter geschaltet.

Zur Realisierung dieser Funktionalität weist die Ventileinrichtung bevorzugt ein vom Vorsteuerdruck Cv bzw. vom Bremsdruck C gegen die Wirkung von Federmitteln steuerbares 2/2-Wegeventil oder eine vom Vorsteuerdruck Cv oder Bremsdruck C gegen die Wirkung von Federmitteln steuerbare Druckschalter-Elektromagnetventil-Kombination auf.

Die Notwendigkeit, dass beide Signale kumulativ ("UND-Schaltung") vorliegen müssen wird schaltungstechnisch dadurch verwirklicht, dass das vom Vorsteuerdruck Cv oder vom Bremsdruck C gegen die Wirkung von Federmitteln steuerbare 2/2-Wegeventil oder die vom Vorsteuerdruck Cv oder vom Bremsdruck C gegen die Wirkung von Federmitteln steuerbare Druckschalter-Elektromagnetventil-Kombination in eine zwischen dem Druckluftbehälter und der Steuerseite des Relaisventils verlaufende Druckleitung geschaltet ist.

Gemäß einer besonders zu bevorzugenden Ausführungsform ist ein weiterer Druckluftbehälter als Zwischenspeicher für Druckluft aus der Hauptluftbehälterleitung HB vorgesehen ist, wobei der weitere Druckluftbehälter mittels der Ventileinrichtung entweder mit dem einen Druckluftbehälter oder mit der Hauptluftbehälterleitung HB verbindbar ist. Beispielsweise wird der weitere Druckluftbehälter mittels der Ventileinrichtung in Strömungsverbindung mit dem einen Druckluftbehälter geschaltet, wodurch zwischen beiden Druckluftbehältern ein Druckausgleich auf einen Druck stattfindet, welcher dann auf die Steuerseite des Relaisventils des Führerbremsventils wirkt, um den Angleichvorgang automatisch auszulösen.

Dabei ist vorzugsweise zwischen den einen Druckluftbehälter und die Steuerseite des Relaisventils ein Druckbegrenzungsventil geschaltet. Durch dieses Druckbegrenzungsventil wird verhindert, dass durch ständiges Schnellbremsen und anschließendes Angleichen sich ein zu hoher Druck in dem einen Druckluftbehälter aufbaut.

Bevorzugt ist auch wenigstens ein Druckminderventil in eine Druckluftverbindung zwischen einer Hauptluftbehälterleitung HB und den Druckluftbehälter geschaltet, damit ein bestimmter Druck im Druckluftbehälter eingestellt werden kann.

Weitere die Erfindung verbessernde Maßnahmen werden nachstehend gemeinsam mit der Beschreibung von Ausführungsbeispielen der Erfindung anhand der Zeichnung näher dargestellt.

### Zeichnung

In der Zeichnung zeigt
- Fig.1: einen schematischen Schaltplan einer bevorzugten Ausführungsform einer mit einem Führerbremsventil zusammen wirkenden Vorrichtung zum Angleichen des Hauptluftleitungsdrucks;
- Fig.2: einen schematischen Schaltplan einer weiteren Ausführungsform der Vorrichtung zum Angleichen des Hauptluftleitungsdrucks;
- Fig.3: einen schematischen Schaltplan einer weiteren Ausführungsform der Vorrichtung zum Angleichen des Hauptluftleitungsdrucks.

### Beschreibung der Ausführungsbeispiele

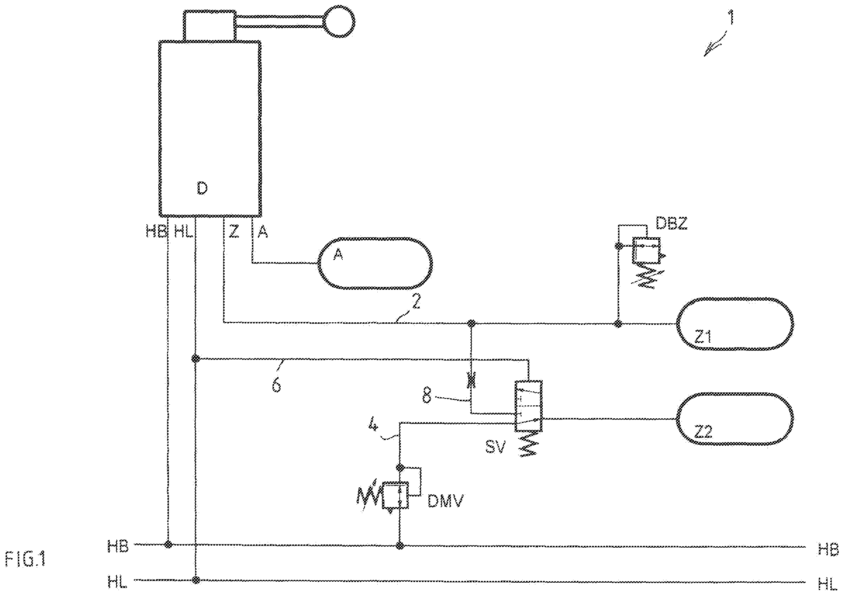

Die in Fig.1 gezeigte mit einem Führerbremsventil D zusammen wirkende Vorrichtung 1 zum Angleichen des Hauptluftleitungsdrucks einer Hauptluftleitung HL von Fahrzeugen eines Schienenfahrzeugzuges auf einen gemeinsamen Regelbetriebsdruck beinhaltet einen Druckmittelbehälter Z1 oder Zeitbehälter Z1 mit einem Volumen von beispielsweise 20 Litern zur temporären Speicherung von Druckluft, mit welcher durch Betätigen eines manuellen Bedienorgans des Führerbremsventils D bzw. automatisch eine Steuerseite Z eines hier nicht gezeigten Relaisventils des Führerbremsventils D für den Angleichvorgang beaufschlagbar ist. Dieser Zeitbehälter Z1 steht über eine Druckleitung 2 mit der Steuerseite Z des Relaisventils in Verbindung. Weiterhin weist das Führerbremsventil D auch Anschlüsse zur Verbindung mit der Hauptluftbehälterleitung HB bzw. mit der Hauptluftleitung HL sowie mit einem hier nicht interessierenden Ausgleichsbehälter A auf.

Mit einem solchen Zeitbehälter Z1 zusammen wirkende Führerbremsventile D zum Ausführen eines Angleichvorgangs sind hinlänglich bekannt, beispielsweise aus der DE 1 149 736. Deshalb soll diese Funktionalität bzw. ein solches Führerbremsventil D hier nicht mehr beschrieben werden.

Die Vorrichtung 1 umfasst eine vom Hauptluftleitungsdruck der Hauptluftleitung HL steuerbare Ventileinrichtung SV, durch welches die Steuerseite Z des Relaisventils des Führerbremsventils D für einen automatischen Angleichvorgang mit Druckluft aus dem Zeitbehälter Z1 beaufschlagbar ist.

Besonders bevorzugt beinhaltet die Ventileinrichtung hierzu wenigstens ein vom Hauptluftleitungsdruck der Hauptluftleitung HL gegen die Wirkung von Federmitteln steuerbares 3/2-Wegeventil SV.

Dieses 3/2-Wegeventil SV verbindet mittels einer Druckleitung 4 gemäß einer ersten federbelasteten Schaltstellung die Hauptluftbehälterleitung HB mit einem weiteren Druckmittelbehälter oder Zeitbehälter Z2, welcher beispielsweise einen Volumen von 5 Litern umfasst. In diese Druckleitung 4 ist ein Druckminderventil DMV geschaltet. Gemäß einer zweiten, vom Hauptluftleitungsdruck der Hauptluftleitung HL über eine Steuerleitung 6 gegen die Wirkung der Federmittel eingestellten Schaltstellung verbindet das 3/2-Wegeventil SV mittels einer Druckleitung 8 den weiteren Zeitbehälter Z2 beispielsweise mit der vom ersten Zeitbehälter Z1 zum Anschluss des Führerbremsventils D führenden Druckleitung 2. In diese Druckleitung 8 ist eine Drossel oder Düse geschaltet. Weiterhin ist in die zwischen dem einen Zeitbehälter Z1 und der Steuerseite Z des Relaisventils verlaufenden Druckleitung 2 ein Druckbegrenzungsventil DBZ geschaltet.

Vor diesem Hintergrund ist die Funktionsweise der Vorrichtung 1 im Zusammenspiel mit dem Führerbremsventil wie folgt: Bei abgestelltem und eingebremstem Schienenfahrzeugzug ist der der Druck in der Hauptluftbehälterleitung HL niedrig und beträgt ungefähr weniger als 2 bar (2 x 10⁵ Pa). Das Führerbremsventil D befindet sich in der Absperrstellung. Dabei ist der eine Zeitbehälter Z1 entlüftet, wobei sich das 3/2-Wegeventil SV in der in Fig.1 gezeigten ersten federbelasteten Schaltstellung befindet, in welcher die Hauptluftbehälterleitung HB mit dem weiteren Zeitbehälter Z2 verbunden ist, um diesen zu belüften. Der in diesem Zustand niedrige Hauptluftleitungsdruck der Hauptluftleitung HL vermag das 3/2-Wegeventil SV nicht gegen die Wirkung der Federmittel umzuschalten.

Wenn das Führerbremsventil D hingegen nach einer Schnellbremsung in Fahrstellung gestellt wird, überschreitet der Hauptluftleitungsdruck in der Hauptluftleitung HL einen vorgegebenen Ansprech- oder Schaltdruck des 3/2-Wegeventils SV, beispielsweise 2,5 bar (2,5 x 10⁵ Pa) und beträgt beispielsweise 5 bar (5 x 10⁵ Pa). Aufgrund des den Ansprechdruck überschreitenden Drucks in der Steuerleitung 6 des 3/2-Wegeventils SV schaltet dieses nun gegen die Wirkung der Federmittel in seine zweite Schaltstellung, in welcher der weitere Zeitbehälter Z2 mit dem einen Zeitbehälter Z1 verbunden wird. Damit wird der Zeitbehälter Z1 mit der aus der Hauptluftbehälterleitung HB stammenden Druckluft aus dem weiteren Zeitbehälter Z2 über die Drossel belüftet, bis Druckausgleich herrscht und sich beispielsweise ein gemeinsames Druckniveau von 0,4 bar (0,4 x 10⁻⁵ Pa) einstellt. Dieses gemeinsame Druckniveau wirkt dann über die Druckleitung auf die Steuerseite Z des Relaisventils des Führerbremsventils D und leitet dadurch automatisch den Angleichvorgang ein, bei welchem in bekannter Weise ein gemeinsamer Regelbetriebsdruck in die Hauptluftleitung HL eingeregelt wird.

Das Druckbegrenzungsventil DBZ verhindert dann in Verbindung mit der Drossel, dass sich durch ständiges Schnellbremsen und anschließendes Angleichen ein zu hoher Druck in dem einen Druckluftbehälter Z1 bzw. in der Druckleitung 2 aufbaut.

Bei der Ausführungsform von Fig.1 wird daher ein Führerbremsventil D des Stands der Technik lediglich durch den weiteren Zeitbehälter Z2, das 2/2-Wegeventil SV, das Druckminderventil DMV, das Druckbegrenzungsventil DBZ sowie durch die entsprechenden Druckleitungen 4, 6, 8 ergänzt, um ein automatisches Angleichen realisieren zu können.

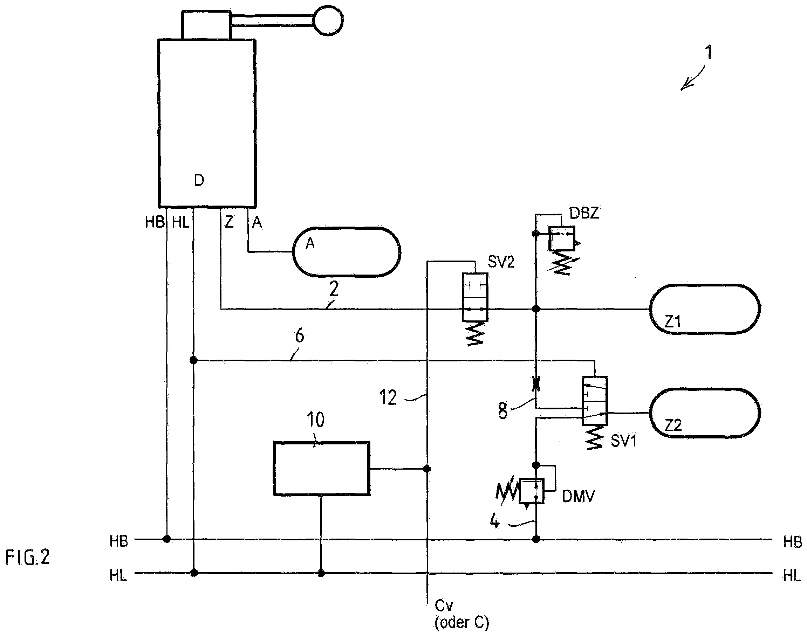

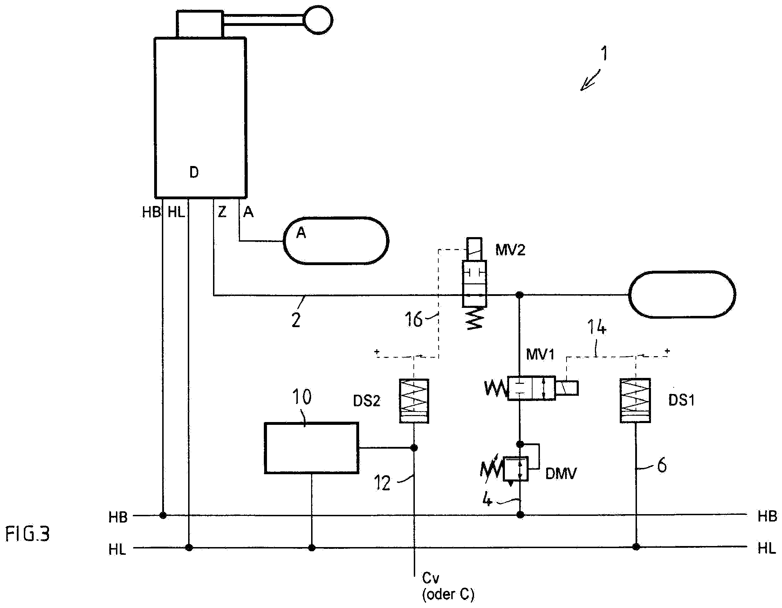

In den weiteren Ausführungsbeispielen gemäß Fig.2 und Fig.3 sind gleiche Bauteile und Baugruppen mit den gleichen Bezugszeichen gekennzeichnet, das 3/2-Wegeventil jedoch mit SV1 anstatt mit SV.

Bei den Ausführungsformen von Fig.2 und Fig.3 ist die Lokomotive des Schienenfahrzeugzuges mit einem Steuerventil 10 mit Angleicherventil wie in DE 33 27 903 A1 beschrieben ausgerüstet. Dann kann die Ventileinrichtung 1 zusätzlich von einem vom Druck in der Hauptluftbehälterleitung HB abgeleiteten Vorsteuerdruck Cv dieses Steuerventils 10 derart steuerbar sein, dass zusätzlich ein einen vorgegebenen Vorsteuerdruck Cv* unterschreitender Vorsteuerdruck Cv vorhanden sein muss, damit die Steuerseite Z des Relaisventils mit der Druckluft aus dem einen Zeitbehälter Z1 beaufschlagt und andernfalls eine solche Druckbeaufschlagung unterbunden wird.

Bei den Ausführungsformen nach Fig.2 und Fig.3 müssen somit beide pneumatischen Signale kumulativ die beschriebenen charakteristischen Verhaltensweisen zeigen, nämlich einerseits der Hauptluftleitungsdruck der Hauptluftleitung HL und andererseits der Vorsteuerdruck Cv, damit ein Angleichvorgang automatisch ausgelöst werden kann.

Hierzu wird das in der obigen Beschreibung zur Ausführungsform von Fig.1 beschriebene 3/2-Wegeventil SV1 wie zuvor durch den Druck in der Hauptluftleitung HL gesteuert, um den Zeitbehälter Z1 belüften zu können.

Weiterhin weist die Ventileinrichtung 1 gemäß der Ausführungsform von Fig.2 ein vom Vorsteuerdruck Cv gegen die Wirkung von Federmitteln steuerbares 2/2-Wegeventil SV2 auf. Dieses durch eine vom Steuerventil 10 herangeführte Steuerleitung 12 vom Vorsteuerdruck Cv gesteuerte 2/2-Wegeventil SV2 schaltet gemäß einer ersten in Fig.2 gezeigten Schaltstellung die vom einen Zeitbehälter Z1 zur Steuerseite Z des Relaisventils des Führerbremsventils führende Druckleitung 2 durch und sperrt diese Verbindung gemäß einer zweiten Schaltstellung.

Erst wenn der Vorsteuerdruck Cv einen Ansprechdruck Cv* von beispielsweise etwa 0,3 bar (0,3 x 10⁻⁵ Pa) unterschritten hat, was typischerweise nach einem Schnellbremsvorgang der Fall ist, wird das 2/2-Wegeventil SV2 gegen die Wirkung der Federmittel in seine in Fig.2 gezeigte Durchlassstellung geschaltet, wodurch die Steuerseite Z des Relaisventils des Führerbremsventils D zum automatischen Angleichen von der Druckluft aus dem über das 2/2-Wegeventil SV1 belüfteten Zeitbehälter Z1 beaufschlagt wird.

Ist jedoch der Vorsteuerdruck Cv größer als der Ansprechdruck Cv*, was beispielsweise bei einem Bremsvorgang der Fall ist, so schaltet das 2/2-Wegeventil SV2 in seine Sperrstellung und verhindert dadurch das Weiterschalten des Drucks im Zeitbehälter Z1 auf die Steuerseite Z des Relaisventils und damit den automatischen Angleichvorgang. Anstatt des Vorsteuerdrucks Cv könnte auch ein vom Steuerventil 10 ausgesteuerter Bremsdruck C die Schaltvorgänge des 2/2-Wegeventils SV2 steuern.

Im vorliegenden Fall muss daher einerseits der Hauptluftleitungsdruck in der Hauptluftleitung HL den vorgegebenen Ansprech- oder Schaltdruck des 3/2-Wegeventils SV1 überschreiten und andererseits der Vorsteuerdruck Cv den Ansprechdruck Cv* des 2/2-Wegeventils SV2 unterschreiten, damit ein automatischer Angleichvorgang eingeleitet werden kann. Dabei wird der eine Zeitbehälter Z1 abhängig vom Hauptluftleitungsdruck der Hauptluftleitung HL belüftet und der Druck in diesem Zeitbehälter Z1 abhängig vom Vorsteuerdruck Cv oder vom Bremsdruck C auf die Steuerseite Z des Relaisventils des Führerbremsventils D weiter geschaltet.

Bei der Ausführungsform von Fig.2 wird daher ein Führerbremsventil D des Stands der Technik durch den weiteren Zeitbehälter Z2, die Wegeventile SV1 und SV2, das Druckminderventil DMV, das Druckbegrenzungsventil DBZ sowie durch die entsprechenden Druckleitungen 4, 6, 8, 12 ergänzt, um ein automatisches Angleichen realisieren zu können. Das Steuerventil 10 ist ohnehin bereits vorhanden.

Die zur Ausführungsform von Fig.2 beschriebene Funktionalität ist auch bei der Ausführungsform von Fig.3 vorhanden, welche aber nur einen Zeitbehälter aufweist. Die Ventileinrichtung 1 beinhaltet eine vom Hauptluftleitungsdruck der Hauptluftleitung HL gegen die Wirkung von Federmitteln steuerbare Druckschalter-Elektromagnetventil-Kombination DS1, MV1.

Genauer schaltet der Druckschalter DS1 abhängig vom Hauptluftleitungsdruck der Hauptluftleitung HL ein elektrisches Signal auf eine elektrische Steuerleitung 14 des 2/2-Wege-Magnetventils MV1. Steht also in der Hauptluftleitung HL ein Hauptluftleitungsdruck an, welcher einen vorgegebenen Ansprech- oder Schaltdruck des Druckschalters DS1 unterschreitet, so erzeugt der Druckschalter DS1 ein elektrisches Signal, welches das 2/2-Wege-Magnetventil MV1 von einer federbelasteten Sperrstellung in eine Durchlassstellung schaltet, in welcher das 2/2-Wege-Magnetventil MV1 die mit der Hauptluftbehälterleitung HB verbundene Druckleitung 4 mit dem Zeitbehälter verbindet. In jener Druckleitung 4 ist auch das Druckminderventil DMV angeordnet, um den von der Hauptluftbehälterleitung HB in den Zeitbehälter eingesteuerten Druck auf einen voreingestellten Druck einzustellen.

Liegt dagegen der Hauptluftleitungsdruck der Hauptluftleitung HL über dem Ansprechdruck des Druckschalters DS1 von etwa 2 bar (2,0 x 10⁵ Pa), so erzeugt der elektrische Druckschalter kein elektrisches Signal, so dass das 2/2-Wege-Magnetventil MV1 in seiner federbelasteten Sperrstellung verbleibt und somit den Zeitbehälter nicht belüftet.

In die vom Zeitbehälter zu der Steuerseite des Relaisventils des Führerbremsventils D führende Druckleitung 2 ist eine weitere Druckschalter-Elektromagnetventil-Kombination DS2, MV2 geschaltet, welche vom Vorsteuerdruck Cv oder vom Bremsdruck C gegen die Wirkung von Federmitteln steuerbar ist.

Falls der vom Steuerventil ausgesteuerte Vorsteuerdruck Cv oder Bremsdruck C den Ansprechdruck Cv* oder C* des Druckschalters DS2 unterschritten hat, was beim Stellen des Führerbremsventils D nach einer Schnellbremsung in die Fahrstellung der Fall ist, so erzeugt der Druckschalter DS2 ein elektrisches Signal. Dieses elektrische Signal wird über eine elektrische Steuerleitung 16 in das 2/2-Wege-Magnetventil MV2 eingesteuert, um dieses in die in Fig.3 gezeigte Durchlassstellung zu schalten. Dadurch wird die Steuerseite des Relaisventils des Führerbremsventils D mit Druckluft aus dem durch das 2/2-Wege-Magnetventil MV1 und den Druckschalter DS1 belüfteten Zeitbehälter beaufschlagt, um ein automatisches Angleichen durchzuführen.

Bei der Ausführungsform von Fig.3 wird daher ein Führerbremsventil D des Stands der Technik lediglich durch die beiden Druckschalter-Elektromagnetventil-Kombination DS2, MV1 bzw. DS2, MV2 sowie durch die entsprechenden Druckleitungen 4, 6, 12 bzw. elektrischen Steuerleitungen 14, 16 ergänzt, um ein automatisches Angleichen realisieren zu können.

### Bezugszeichenliste

- 1: Vorrichtung
- 2: Druckleitung
- 4: Druckleitung
- 6: Steuerleitung
- 8: Druckleitung
- 10: Steuerventil mit Angleicherventil
- 12: Steuerleitung
- 14: elektr. Steuerleitung
- 16: elektr. Steuerleitung

## Patentansprüche

1. Mit einem Führerbremsventil (D) zusammen wirkende Vorrichtung zum Angleichen des Hauptluftleitungsdrucks (HL) von Fahrzeugen eines Schienenfahrzeugzuges auf einen gemeinsamen Regelbetriebsdruck, beinhaltend einen Druckmittelbehälter (Z1) zur temporären Speicherung von Druckluft, mit welcher durch Betätigen eines manuellen Bedienorgans eine Steuerseite eines Relaisventils des Führerbremsventils (D) für den Angleichvorgang beaufschlagbar ist, **dadurch gekennzeichnet, dass** eine wenigstens vom Hauptluftleitungsdruck einer Hauptluftleitung (HL) steuerbare Ventileinrichtung (SV; SV1, SV2; DS1, MV1, DS2, MV2) vorgesehen ist, durch welche die Steuerseite (Z) des Relaisventils des Führerbremsventils (D) für einen automatischen Angleichvorgang mit Druckluft aus dem Druckmittelbehälter (Z1) beaufschlagbar ist.

2. Vorrichtung nach Anspruch 1, **dadurch gekennzeichnet, dass** die Ventileinrichtung (SV; SV1; DS1, MV1) vom Hauptluftleitungsdruck der Hauptluftleitung (HL) derart steuerbar ist, dass sie bei Vorliegen eines einen vorgegebenen Ansprechdruck erreichenden oder überschreitenden Hauptluftleitungsdrucks der Hauptluftleitung (HL) die Steuerseite (Z) des Relaisventils des Führerbremsventils (D) für den automatischen Angleichvorgang mit Druckluft aus dem Druckmittelbehälter (Z1) beaufschlagt, welche aber bei Vorliegen eines den vorgegebenen Ansprechdruck unterschreitenden Hauptluftleitungsdrucks der Hauptluftleitung (HL) eine solche Druckbeaufschlagung unterbindet.

3. Vorrichtung nach Anspruch 2, **dadurch gekennzeichnet, dass** die Ventileinrichtung (SV; SV1, SV2; DS1, MV1, DS2, MV2) wenigstens ein vom Hauptluftleitungsdruck der Hauptluftleitung (HL) gegen die Wirkung von Federmitteln steuerbares 3/2-Wegeventil (SV; SV1) oder eine vom Hauptluftleitungsdruck der Hauptluftleitung (HL) gegen die Wirkung von Federmitteln steuerbare Druckschalter-Elektromagnetventil-Kombination (DS1, MV1) beinhaltet.

4. Vorrichtung nach einem der vorhergehenden Ansprüche, **dadurch gekennzeichnet, dass** die Ventileinrichtung (SV1, SV2; DS1, MV1, DS2, MV2) zusätzlich vom Vorsteuerdruck (Cv) oder Bremsdruck (C) eines Steuerventils einer Lokomotive derart steuerbar ist, dass bei Vorliegen eines einen vorgegebenen Vorsteuerdruck (Cv*) oder Bremsdruck (C*) unterschreitenden Vorsteuerdrucks (Cv) oder Bremsdrucks (C) die Steuerseite des Relaisventils mit der Druckluft aus dem Druckmittelbehälter (Z1) beaufschlagt und andernfalls eine solche Druckbeaufschlagung unterbunden wird.

5. Vorrichtung nach Anspruch 4, **dadurch gekennzeichnet, dass** die Ventileinrichtung (SV1, SV2; DS1, MV1, DS2, MV2) ein vom Vorsteuerdruck (Cv) oder vom Bremsdruck (C) gegen die Wirkung von Federmitteln steuerbares 2/2-Wegeventil (SV2) oder eine vom Vorsteuerdruck (Cv) oder vom Bremsdruck (C) gegen die Wirkung von Federmitteln steuerbare Druckschalter-Elektromagnetventil-Kombination (DS2, MV2) beinhaltet.

6. Vorrichtung nach Anspruch 5, **dadurch gekennzeichnet, dass** das vom Vorsteuerdruck (Cv) oder vom Bremsdruck (C) gegen die Wirkung von Federmitteln steuerbare 2/2-Wegeventil (SV2) oder die vom Vorsteuerdruck (Cv) oder vom Bremsdruck (C) gegen die Wirkung von Federmitteln steuerbare Druckschalter-Elektromagnetventil-Kombination (DS2, MV2) in eine zwischen dem Druckluftbehälter (Z1) und der Steuerseite (Z) des Relaisventils verlaufende Druckleitung (2) geschaltet ist.

7. Vorrichtung nach einem der vorhergehenden Ansprüche, **dadurch gekennzeichnet, dass** ein weiterer Druckluftbehälter (Z2) als Zwischenspeicher für die Druckluft aus der Hauptluftbehälterleitung (HB) vorgesehen ist, wobei der weitere Druckluftbehälter (Z2) mittels der Ventileinrichtung (SV; SV1) entweder mit dem einen Druckluftbehälter (Z1) oder mit der Hauptluftbehälterleitung (HB) verbindbar ist.

8. Vorrichtung nach Anspruch 7, **dadurch gekennzeichnet, dass** zwischen den einen Druckluftbehälter (Z1) und die Steuerseite des Relaisventils ein Druckbegrenzungsventil (DBZ) geschaltet ist.

9. Vorrichtung nach einem der vorhergehenden Ansprüche, **dadurch gekennzeichnet, dass** wenigstens ein Druckminderventil (DMV) zwischen eine Hauptluftbehälterleitung (HB) und den Druckluftbehälter (Z2; Z) geschaltet ist.

## Claims

1. Device that co-operates with a master brake valve (D) for adjusting the main air supply pressure (HL) of carriages of a rail vehicle to a common control operating pressure, comprising a pressure medium container (Z1) for the temporary storage of compressed air, with which, by actuating a manual operating element, a control side of a relay valve of the master brake valve (D) can be acted upon for the adjustment process, **characterised in that** a valve device (SV; SV1, SV2; DS1, MV2) that can be controlled at least by the main air supply pressure of a main air line (HL) is provided, by means of which the control side (Z) of the relay valve of the master brake valve (D) can be acted upon by compressed air from the pressure medium container (Z1) for an automatic adjustment process.

2. Device according to Claim 1, **characterised in that** the valve device (SV; SV1; DS1, MV1) can be controlled by the main air supply pressure of the main air line (HL) in such manner that in the presence of a main air supply pressure of the main air line (HL) that reaches or exceeds a predetermined response pressure, it acts upon the control side (Z) of the relay valve of the master brake valve (D) for the automatic adjustment process, with compressed air from the compressed air container (Z1), but in the presence of a main air supply pressure lower than the said predetermined response pressure, it suppresses such pressure action.

3. Device according to Claim 2, **characterised in that** the valve device (SV; SV1, SV2; DS1, MV1, DS2, MV2) contains at least one 3/2-way valve (SV; SV1) that can be operated by the main air supply pressure of the main air line (HL) in opposition to the action of spring means, or a pressure switch- electromagnetic valve combination (DS1, MV1) that can be operated by the main air supply pressure of the main air line (HL) in opposition to the action of spring means.

4. Device according to any of the preceding claims, **characterised in that** the valve device (SV1, SV2; DS1, MV1, DS2, MV2) can in addition be operated by the pilot pressure (Cv) or the brake pressure (C) of a control valve of a locomotive in such manner that in the presence of a pilot pressure (Cv) or brake pressure (C) that is lower than a predetermined pilot pressure (Cv*) or brake pressure (C*), the control side of the relay valve is acted upon by compressed air from the compressed air container (Z1), whereas otherwise such pressure action is suppressed.

5. Device according to Claim 4, **characterised in that** the valve device (SV1, SV2; DS1, MV1, DS2, MV2) contains a 2/2-way valve which can be operated by the pilot pressure (Cv) or by the brake pressure (C) in opposition to the action of spring means, or a pressure switch-electromagnetic valve combination (DS2, MV2) which can be operated by the pilot pressure (Cv) or by the brake pressure (C) in opposition to the action of spring means.

6. Device according to Claim 5, **characterised in that** the 2/2-way valve which can be operated by the pilot pressure (Cv) or by the brake pressure (C) in opposition to the action of spring means, or the pressure switch-electromagnetic valve combination (DS2, MV2) which can be operated by the pilot pressure (Cv) or by the brake pressure (C) in opposition to the action of spring means, is connected into a pressure line (2) running between the compressed air container (Z1) and the control side (Z) of the relay valve.

7. Device according to any of the preceding claims, **characterised in that** a further compressed air container (Z2) is provided as an intermediate reservoir for the compressed air from the main air container line (HB), and the said further compressed air container (Z2) can be connected by means of the valve device (SV; SV1) either to the first compressed air container (Z1) or to the main air container line (HB).

8. Device according to Claim 7, **characterised in that** a pressure-limiting valve (DBZ) is connected between the first compressed air container (Z1) and the control side of the relay valve.

9. Device according to any of the preceding claims, **characterised in that** at least one pressure-reducing valve (DMV) is connected between a main air container line (HB) and the compressed air container (Z2; Z).

## Revendications

1. Système coopérant avec une soupape (D) de freinage de conducteur pour équilibrer la pression du conduit (HL) d'aération principale de véhicule d'un train de véhicule ferroviaire à une pression de fonctionnement réglée commune, comportant un réservoir (Z1) à fluide sous pression pour accumuler temporairement de l'air comprimé, en lequel, par actionnement d'un organe manuel de service, un côté de i commande d'une vanne-relais de la soupape (D) de freinage de conducteur peut être alimenté pour l'opération d'équilibrage, **caractérisé en ce qu'**il est prévu un dispositif (SV; SV1; SV2; DS1; MV1; DS2; MV2) de soupape pouvant être commandé par la pression dans un conduit (HL)) d'aération principale et par lequel le côté (Z) de commande de la vanne relais de la soupape (D) de freinage de conducteur peut être alimenté pour une opération d'équilibrage automatique en air comprimé à partir du réservoir (Z1) à fluide sous pression.

2. Système suivant la revendication 1, **caractérisé en ce que** le dispositif (SV; SV1; DS1; MV1) de vanne peut être commandé par la pression dans le conduit (HL) d'aération principale, de manière à, en présence d'une pression dans le conduit (HL) d'aération principale atteignant ou dépassant une pression de réaction donnée à l'avance, alimenter le côté (Z) de pression de la vanne-relais de la soupape (D) de freinage de conducteur, pour l'opération d'équilibrage automatique en air comprimé à partir du réservoir (Z1) à fluide sous pression, mais qui, en présence d'une pression dans le conduit (HL) d'aération principale inférieure à la pression de réaction donnée à l'avance, supprime une telle alimentation en pression.

3. Système suivant la revendication 2, **caractérisé en ce que** le dispositif (SV; SV1; SV2; DS1; MV1; DS2; MV2) de soupape comporte au moins une soupape (SV; SV1) à 3/2 voies pouvant être commandée par la pression dans le conduit (HL) d'aération principale à l'encontre de l'effet de moyens de ressort ou une combinaison (DS1; MV1) interrupteur manométrique-électrovanne pouvant être commandée par la pression dans le conduit (HL) d'aération principale à l'encontre de l'effet de moyens de ressort.

4. Système suivant l'une des revendications précédentes, **caractérisé en ce que** le dispositif (SV1; SV2; DS1; MV1; DS2; MV2) de soupape peut être commandé supplémentairement par la pression (Cv) pilote ou la pression (C) de freinage d'une soupape de commande d'une locomotive, de manière, en présence d'une pression (Cv) pilote ou d'une pression (C) de freinage en dessous d'une pression (Cv*) pilote ou d'une pression (C*) pilote donnée à l'avance, à alimenter le côté de commande de la vanne-relais en l'air comprimé à partir du réservoir (Z1) à fluide sous pression et, sinon, à supprimer une alimentation en pression de ce genre.

5. Système suivant la revendication 4, **caractérisé en ce que** le dispositif (SV1; SV2; DS1; MV1; DS2; MV2) de soupape comporte une vanne (SV2) à 2/2 voies pouvant être commandée par la pression (Cv) pilote ou la pression (C) de freinage à l'encontre de l'effet de moyens de ressort ou une combinaison (DS2, MV2) interrupteur manométrique-électrovanne pouvant être commandée par la pression (Cv) de commande ou par la pression (C) de freinage à l'encontre de l'effet de moyens de ressort.

6. Système suivant la revendication 5, **caractérisé en ce que** la soupape (SV2) à 2/2 voies, pouvant être commandée par la pression (Cv) pilote ou par la pression (C) de freinage à l'encontre de moyen à ressort ou la combinaison (DS2; MV2) interrupteur manométrique-électrovanne pouvant être commandée par la pression (Cv) pilote ou par la pression (C) de freinage à l'encontre de l'effet de moyens de ressort, est montée dans un conduit (2) sous pression s'étendant entre le réservoir (Z1) à air comprimé et le côté (Z) de commande de la vanne-relais.

7. Système suivant l'une des revendications précédentes, **caractérisé en ce qu'**il est prévu un autre réservoir (Z2) d'air comprimé comme réservoir intermédiaire pour l'air comprimé provenant du conduit (HB) de réservoir d'aération principale, l'autre réservoir (Z2) d'air comprimé communiquant, au moyen du dispositif (SV; SV1) de soupape, soit avec le un réservoir (Z1) d'air comprimé, soit avec le conduit (HB) de réservoir d'aération principale.

8. Système suivant la revendication 7, **caractérisé en ce qu'**une soupape (DBZ) de limitation de la pression est montée entre un réservoir (Z1) d'air comprimé et le côté de commande de la vanne-relais.

9. Système suivant l'une des revendications précédentes, **caractérisé en ce qu'**au moins un détenteur (DMV) est monté entre un conduit (HB) de réservoir d'aération principale et le réservoir Z2; Z) d'air comprimé.
